# EUROPEAN PATENT APPLICATION

(11) **EP 2 645 352 A1**
(43) Date of publication of application: **02.10.2013**
(21) Application number: 11842849.9
(22) Date of filing: 16.11.2011
(51) Int. Cl.: G09F 9/00, G02F 1/1333, G02F 1/1335

(54) **DISPLAY DEVICE AND METHOD FOR MANUFACTURING SAME**

(30) Priority: 26.11.2010 JP 2010263865
(71) Applicant: Sony Corporation, Tokyo 108-0075 (JP)
(72) Inventor: TSUBOI Hisanori, Tokyo 108-0075 (JP); FUJII Hiroaki, Tokyo 108-0075 (JP); ARAKI Soya, Tokyo 108-0075 (JP); TERAMOTO Ryoichi, Tokyo 108-0075 (JP)
(74) Representative: Davies, Simon Robert
(86) International application number: PCT/JP2011/076403
(87) International publication number: WO 2012/070446

(57) **Abstract**

A display capable of suppressing curing failure of a resin layer on a backside of a light shielding layer and a method of manufacturing the display are provided. Light L is applied from a side surface 30B side of a transparent substrate 30 and is allowed to enter the transparent substrate 30 from the side surface 30B or in the vicinity thereof to be guided through the transparent substrate 30. An intermediate layer 40 that has a refractive index lower than a refractive index of the transparent substrate 30 in a wavelength range of the light L is provided on a front surface 30A of the transparent substrate 30 to totally reflect the light L. On a back surface 30C of the transparent substrate 30, a refractive index of the resin 21 before and after curing is higher than the refractive index of the transparent substrate 30 in the wavelength range of he light L, and thus the light L enters the resin 21 to cure the resin 21, and the resin layer 20 is accordingly formed. Curing failure of the resin layer 20 on the backside of a light shielding layer 50 is suppressed, and leakage of liquid of uncured resin, frame-like display unevenness in a non-display region B and in the vicinity thereof, and the like are suppressed.

## Description

### Technical Field

The present invention relates to a display included in, for example, a television and a method of manufacturing the same.

### Background Art

In recent years, for example, displays such as those including liquid crystal and an organic EL (electroluminescence) are used as a display monitor for a flat television, a notebook personal computer, a car navigation, and the like. In such a display, it is known that a front plate formed of a transparent substrate such as plastic and glass is provided on a front surface side (a display side) of the display panel, in terms of surface protection and design (for example, see PTLs 1 to 4).

In PTL 1, to prevent image quality degradation caused by interface reflection, it is proposed that a transparent material adjusted in refractive index is interposed between the front plate and the display panel. In addition, in PTLs 2 to 4, for example, liquid, a gel sheet, an adhesive sheet, and photocurable resin are used as such a transparent material.

For example, in the case of using photocurable resin of the above-described transparent materials, after the photocurable resin is sandwiched between the display panel and the front plate, the resin material is cured by light application from the front plate side. Using the photocurable resin eliminates concern such as leakage compared with a liquid material, and makes it difficult for dust and air bubbles to enter at the time of manufacturing compared with an adhesive sheet. Further, it becomes possible to bond the display panel to the front plate without being affected by distortion, a step structure, etc. of the display panel and the front plate.

On the other hand, in the front plate, a region facing a non-display section (a bezel section) of the display panel is subjected to light shielding processing in some cases, in terms of image quality enhancement and design. Specifically, a light shielding layer is formed by, for example, evaporating or printing a light shielding material or bonding an opaque sheet material to a frame-like region along the outer edge of the front plate.

### Citation list

### Patent Literature

PTL 1: Japanese Unexamined Patent Application Publication No. H3-204616
PTL 2: Japanese Unexamined Patent Application Publication No. H6-337411
PTL 3: Japanese Unexamined Patent Application Publication No. 2005-55641
PTL 4: Japanese Unexamined Patent Application Publication No. 2008-281997
PTL 5: Japanese Unexamined Patent Application Publication No. H5-345790
PTL 6: Japanese Unexamined Patent Application Publication No. H10-29997

### Summary of Invention

However, in the case where a resin layer formed of photocurable resin is interposed between the front plate and the display panel and the above-described frame-like light shielding layer is formed on the front plate, the following defects have occurred. Specifically, in such a case, in the manufacturing process, light is applied from a side of a front plate provided with the light shielding layer to cure the resin material, and thus the resin on a backside of the light shielding layer is remained in an uncured state, and liquid of uncured resin may be leaked after application.

The present invention is made in view of the above disadvantages, and it is an object of the present invention to provide a display capable of suppressing curing failure of a resin layer on a backside of a light shielding layer and a method of manufacturing the display.

A first display according to the present invention includes the following components (A) to (E):
(A) a display panel including a display region and a non-display region, the display region including a plurality of pixels, and the non-display region surrounding the display region;
(B) a resin layer provided on a front surface of the display panel and formed of a photocurable resin, the resin having a refractive index higher than a refractive index of the transparent substrate before and after curing in a wavelength range of light used for curing;
(C) a transparent substrate provided on a front surface of the resin layer;
(D) an intermediate layer provided on a front surface of the transparent substrate and having a refractive index lower than the refractive index of the transparent substrate in the wavelength range of the light used for curing the resin; and
(E) a light shielding layer provided in a region of a front surface of the intermediate layer, the region facing the non-display region.

In the first display of the present invention, the light applied for curing the resin in the manufacturing process enters the transparent substrate from the front surface or the side surface thereof. Since the intermediate layer that has the refractive index lower than that of the transparent substrate in the wavelength range of the light used for curing the resin is provided on the front surface of the transparent substrate, the light entering from the side surface of the transparent substrate is totally reflected by an interface between the transparent substrate and the intermediate layer, and is then guided through the transparent substrate. In addition, since the light shielding layer is provided on the front surface of the intermediate layer, the light is not absorbed by the light shielding layer. Further, since the resin layer is formed of a resin that has a refractive index higher than the refractive index of the transparent substrate before and after curing in the wavelength range of the light used for curing, the light enters the resin layer from the transparent substrate to cure the resin. Consequently, curing failure of the resin layer on a backside of the light shielding layer is suppressed.

A second display according to the present invention includes the following components (A) to (D):
(A) a display panel including a display region and a non-display region, the display region including a plurality of pixels, and the non-display region surrounding the display region;
(B) a resin layer provided on a front surface of the display panel and formed of a photocurable resin, the resin having a refractive index higher than a refractive index of a transparent substrate before and after curing in a wavelength range of light used for curing;
(C) a transparent substrate provided on a front surface of the resin layer; and
(D) a light shielding layer provided in a region of a front surface of the transparent substrate, the region facing the non-display region, and the light shielding layer having a refractive index lower than the refractive index of the transparent substrate in the wavelength range of the light used for curing the resin.

In the second display of the present invention, the light applied for curing the resin in the manufacturing process enters the transparent substrate from the front surface or the side surface thereof. In a region of the front surface of the transparent substrate facing the non-display region, since the light shielding layer that has the refractive index lower than that of the transparent substrate in the wavelength range of the light used for curing the resin is provided, the light entering from the side surface of the transparent substrate is totally reflected by an interface between the transparent substrate and the light shielding layer, and is then guided through the transparent substrate. In addition, since the light shielding layer is provided on the front surface of the transparent substrate, the light is not absorbed by the light shielding layer. Further, since the resin layer is formed of a resin that has a refractive index higher than the refractive index of the transparent substrate before and after curing in the wavelength range of the light used for curing, the light enters the resin layer from the transparent substrate to cure the resin. Consequently, curing failure of the resin layer on the backside of the light shielding layer is suppressed.

A first method of manufacturing a display according to the present invention includes the following steps (A) to (D):
(A) providing a transparent substrate on a front surface of a display panel with a photocurable resin in between, the display panel including a display region and a non-display region, the display region including a plurality of pixels, the non-display region surrounding the display region, and using, as the resin, a resin having a refractive index higher than a refractive index of the transparent substrate before and after curing in a wavelength range of light used for curing;
(B) providing an intermediate layer on a front surface of the transparent substrate, the intermediate layer having a refractive index lower than the refractive index of the transparent substrate in the wavelength range of the light used for curing the resin;
(C) providing a light shielding layer in a region of a front surface of the intermediate layer facing the non-display region; and
(D) forming a resin layer by applying light from a front surface side and a side surface side of the display panel to cure the resin.

A second method of manufacturing a display according to the present invention includes the following steps (A) to (C):
(A) providing a transparent substrate on a front surface of a display panel with a photocurable resin in between, the display panel including a display region and a non-display region, the display region including a plurality of pixels, the non-display region surrounding the display region, and using, as the resin, a resin having a refractive index higher than a refractive index of the transparent substrate before and after curing in a wavelength range of light used for curing;
(B) providing a light shielding layer in a region of a front surface of the transparent substrate facing the non-display region, the light shielding layer having a refractive index lower than the refractive index of the transparent substrate in the wavelength range of the light used for curing the resin; and
(C) forming a resin layer by applying light from a front surface side and a side surface side of the display panel to cure the resin.

According to the first display of the present invention or the first method of manufacturing the display of the present invention, the resin layer is formed of a resin that has a refractive index higher than the refractive index of the transparent substrate before and after curing in the wavelength range of the light used for curing, as well as the intermediate layer that has a refractive index lower than that of the transparent substrate in the wavelength range of the light used for curing the resin is provided on the surface of the transparent substrate and the light shielding layer is provided on the front surface of the intermediate layer. Accordingly, the level relationship between the refractive indices of the resin layer, the transparent substrate, and the intermediate layer is optimally adjusted, and curing failure of the resin layer on the backside of the light shielding layer is suppressed.

According to the second display of the present invention or the second method of manufacturing the display of the present invention, the resin layer is formed of a resin that has a refractive index higher than the refractive index of the transparent substrate before and after curing in the wavelength range of the light used for curing, as well as the light shielding layer that has a refractive index lower than that of the transparent substrate in the wavelength range of the light used for curing the resin is provided in a region of the front surface of the transparent substrate facing the non-display region. Accordingly, the level relationship between the refractive indices of the resin layer, the transparent substrate, and the light shielding layer is optimally adjusted, and curing failure of the resin layer on the backside of the light shielding layer is suppressed.

### Brief Description of Drawings

[FIG. 1] FIG. 1 is a sectional diagram illustrating a configuration of a display according to a first embodiment of the present invention.
[FIG. 2] FIG. 2 is a plan view illustrating the configuration of the display illustrated in FIG. 1 as viewed from a light shielding layer side.
[FIG. 3] FIG. 3 is a sectional diagram illustrating an example of a transparent substrate, an intermediate layer, and a light shielding layer illustrated in FIG. 1.
[FIG. 4] FIG. 4 is a sectional diagram illustrating another example of the transparent substrate, the intermediate layer, and the light shielding layer illustrated in FIG. 1.
[FIG. 5] FIG. 5 is a sectional diagram illustrating a part of a method of manufacturing the display illustrated in FIG. 1.
[FIG. 6] FIG. 6 is a sectional diagram illustrating a step subsequent to the step of FIG. 5.
[FIG. 7] FIG. 7 is a sectional diagram illustrating a back side of the light shielding layer illustrated in FIG. 6 in an enlarged manner.
[FIG. 8] FIG. 8 is a sectional diagram illustrating a configuration of a liquid crystal display according to a second embodiment of the present invention.
[FIG. 9] FIG. 9 is a sectional diagram illustrating a part of a method of manufacturing the display illustrated in FIG. 8.
[FIG. 10] FIG. 10 is a sectional diagram illustrating a step subsequent to the step of FIG. 9.
[FIG. 11] FIG. 11 is a sectional diagram illustrating a back side of a light shielding layer illustrated in FIG. 10 in an enlarged manner.
[FIG. 12] FIG. 12 is a sectional diagram illustrating a configuration of a display according to a third embodiment of the present invention.
[FIG. 13] FIG. 13 is a plan view illustrating a configuration of the display illustrated in FIG. 12 as viewed from a light shielding layer side.
[FIG. 14] FIG. 14 is a plan view illustrating an example of a semi-transmissive layer illustrated in FIG. 13.
[FIG. 15] FIG. 15 is a plan view illustrating another example of the semi-transmissive layer illustrated in FIG. 13.
[FIG. 16] FIG. 16 is a plan view illustrating still another example of the semi-transmissive layer illustrated in FIG. 13.
[FIG. 17] FIG. 17 is a plan view illustrating still another example of the semi-transmissive layer illustrated in FIG. 13.
[FIG. 18] FIG. 18 is a sectional diagram illustrating an example of a transparent substrate, an intermediate layer, a light shielding layer, and the semi-transmissive layer illustrated in FIG. 12.
[FIG. 19] FIG. 19 is a sectional diagram illustrating another example of the transparent substrate, the intermediate layer, the light shielding layer, and the semi-transmissive layer illustrated in FIG. 12.
[FIG. 20] FIG. 20 is a sectional diagram illustrating a modification of the display illustrated in FIG. 12.
[FIG. 21] FIG. 21 is a sectional diagram illustrating a configuration of a transparent substrate, an intermediate layer, and a light shielding layer according to Example 1.
[FIG. 22] FIG. 22 is a sectional diagram illustrating a configuration of a transparent substrate, an intermediate layer, and a light shielding layer according to Example 2.
[FIG. 23] FIG. 23 is a sectional diagram illustrating a configuration of a transparent substrate and a light shielding layer according to a comparative example.

### Description of Embodiments

Hereinafter, embodiments of the present invention will be described in detail with reference to drawings. Note that description will be given in the following order.
1. First embodiment (an example in which an intermediate layer and a light shielding layer are provided on a front surface of a transparent substrate, and a refractive index of each of a resin layer, the transparent substrate, and the intermediate layer is adjusted)
2. Second embodiment (an example in which a light shielding layer is provided on a front surface of a transparent substrate, and a refractive index of each of a resin layer, the transparent substrate, and the light shielding layer is adjusted)
3. Third embodiment (an example in which a semi-transmissive layer is provided in a region between a region of a front surface of a transparent substrate facing a display region and a light shielding layer)
4. Examples

### (First Embodiment)

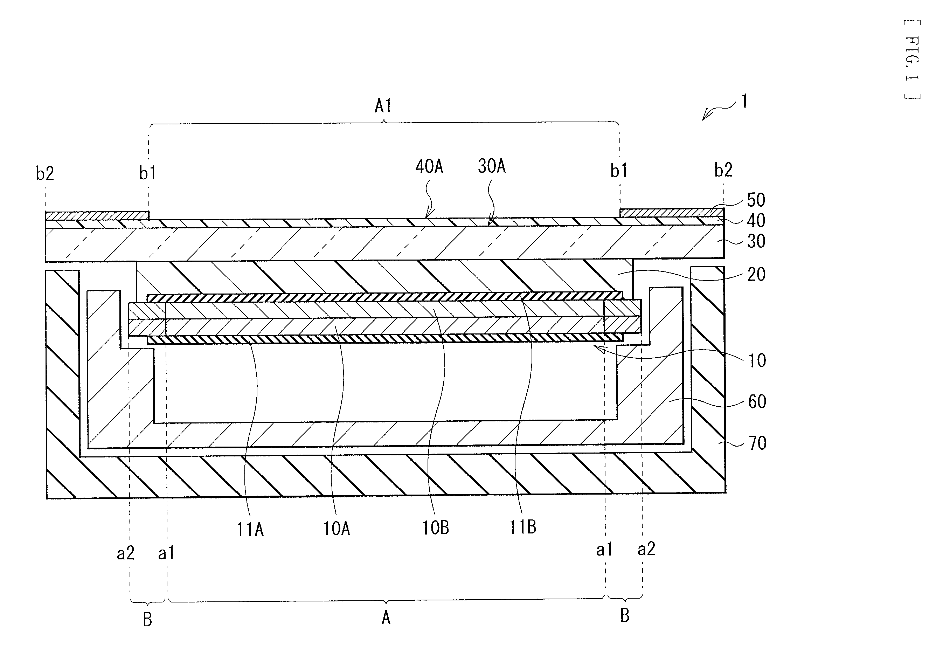

FIG. 1 schematically illustrates a cross-sectional configuration of a display according to a first embodiment of the present invention. The display 1 is a liquid crystal display used as a display monitor of, for example, a television, a notebook personal computer, and a car navigation, and includes a resin layer 20, a transparent substrate 30, an intermediate layer 40, and a light shielding layer 50 in this order on a front surface side (light emission side) of a display panel 10. A backlight unit 60 is provided on a back surface side (light incident side) of the display panel 10. The display panel 10 and the backlight unit 60 are disposed in an exterior member 70.

The display panel 10 is a liquid crystal display panel displaying a picture based on illumination light from the backlight unit 60, and is of an active matrix system displaying a picture for each pixel by a drive signal supplied from a gate driver (not illustrated), based on a picture signal transmitted from a data driver (not illustrated). The display panel 10 is configured by sealing a not-illustrated liquid crystal layer between a drive substrate 10A and a counter substrate 10B. A polarizing plate 11A is bonded to an outside surface of the drive substrate 10A and a polarizing plate 11B is bonded to an outside surface of the counter substrate 10B. On the drive substrate 10A, a TFT (Thin Film Transistor) driving each pixel is disposed on, for example, a glass substrate, and a drive circuit supplying a picture signal and the like to each pixel, a wiring substrate for external connection, and the like are provided. The counter substrate 10B is configured by forming not-illustrated color filters of three primary colors (R, G, and B) for each pixel on, for example, a glass substrate. The liquid crystal layer used includes nematic liquid crystal of VA (Vertical Alignment) mode, TN (Twisted Nemtatic) mode, IPS (In Plane Switching) mode, and the like. Note that the drive substrate 10A and the counter substrate 10B are not necessarily provided in this order. Moreover, the color filters may not be particularly provided, or alternatively, the color filters may be provided not on the counter substrate 10B but on the drive substrate 10A. Further, a drive device other than a TFT may be used.

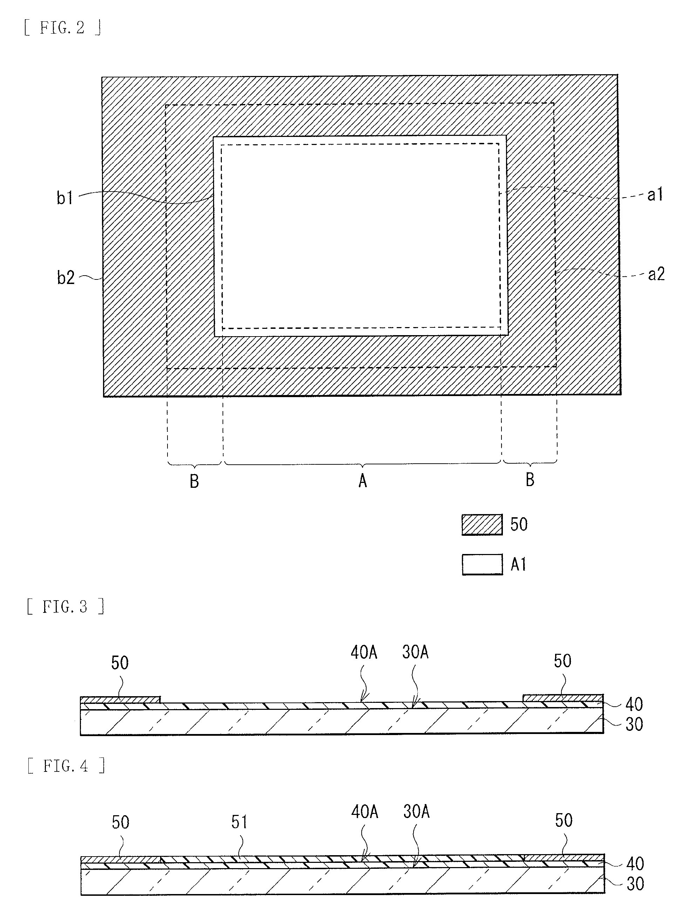

FIG. 2 illustrates a plane configuration of the display 1 illustrated in FIG. 1 as viewed from the light shielding layer 50 side. In the display panel 10, a non-display region B (a frame-like region between a boundary a1 and an edge a2 of the display panel 10) is provided around a display region A (a rectangular region surrounded by the boundary a1). A plurality of pixels are arranged in a matrix in the display region A, and the drive circuit for driving the pixels, the wiring substrate for external connection, and the like are provided in the non-display region B.

The resin layer 20 has a function to suppress interface reflection between the display panel 10 and the transparent substrate 30, and is provided to improve impact resistance. The resin layer 20 is formed of a silicone resin, an epoxy resin, an acrylic resin, or the like that is cured by, for example, ultraviolet light or visible light, and is preferably formed of an acrylic resin. As the acrylic resin, a resin composition containing an oligomer, an acrylic monomer, a photopolymerization initiator, a plasticizer, and the like is desirable. Examples of the oligomer include polyurethane acrylate, polyisoprene acrylate, polyesteracrylate, and epoxyacrylate. As the acrylic monomer, monofunctional acrylic monomer such as isobornyl acrylate, benzyl acrylate, and 2-hydroxyethyl methacrylate is preferable.

Such a resin layer 20 desirably has a cure shrinkage at the time of resin curing of 2% or less, and desirably has a storage elastic modulus after resin curing of 1.0×10⁶ Pa or less in order to suppress display unevenness.

The resin layer 20 desirably has a thickness of 20 µm to 5 mm, and more desirably 20 µm to 500 µm. If the thickness of the resin layer 20 is smaller than 20 µm, bonding strength is lowered or manufacturability is impaired. On the other hand, if the thickness of the resin layer 20 is larger than 500 a sense of depth of image quality becomes remarkable, design is degraded, cost is increased due to increase in the use of resin materials, and further, the weight of the entire display 1 is increased.

The transparent substrate 30 is a so-called front plate that is provided to protect the surface of the display panel 10 and to improve design. The transparent substrate 30 has a thickness of, for example, 0.2 mm to 5.0 mm, and is formed of glass or plastic. Examples of the plastic include acryl and polycarbonate. Incidentally, a glass material is desirably used particularly for a large display in terms of dimensional stability. In addition, a surface on the front surface side (observing side, light emission side) of the transparent substrate 30 is preferably subjected to non-reflection treatment or low-reflection treatment.

The external dimensions of the transparent substrate 30 is larger than the external dimensions of the display panel 10, and the edge b2 of the transparent substrate 30 hangs over by, for example, about 5 mm to about 100 mm toward the outside from the edge a2 of the display panel 10.

The intermediate layer 40 is formed of a transparent resin material on the front surface (a surface on the light emission side) 30A of the transparent substrate 30. Incidentally, the intermediate layer 40 may be provided on the entire front surface 30A of the transparent substrate 30, or may be provided only under the light shielding layer 50. A rectangular region of the intermediate layer 40 or the transparent substrate 30 facing the display region A is a light transmissive section Al for transmitting display light.

The light shielding layer 50 is provided in a frame-like region of the front surface 40A of the intermediate layer 40 facing the non-display region B in order to improve image quality and design. The light shielding layer 50 has a thickness of, for example 0.1 µm to 100 µm, and is formed of an opaque material such as carbon black, metal, pigment, and dye. The edge b1 on the inner side of the light shielding layer 50 is preferably located outside of the boundary a1 between the display region A and the non-display region B of the display panel 10. This makes it possible to prevent the pixels of the display panel 10 from being hidden by the light shielding layer 50 when the display 1 is viewed from an oblique direction.

Further, in the present embodiment, the resin layer 20 is formed of a resin that has a refractive index higher than a refractive index of the transparent substrate 30 before curing (in a liquid state) and after curing (in a solid state) in the wavelength range of the light used for curing. The intermediate layer 40 has a refractive index lower than that of the transparent substrate 30 in the wavelength range of the light used for curing the resin configuring the resin layer 20. Therefore, in the display 1, it is possible to suppress curing failure of the resin layer 20 on the back side of the light shielding layer 50.

FIG. 3 and FIG. 4 each illustrate a specific configuration example of the transparent substrate 30, the intermediate layer 40, and the light shielding layer 50. For example, in FIG. 3, the intermediate layer 40 is provided on the entire front surface 30A of the transparent substrate 30, and the light shielding layer 50 is provided in a region of the front surface 40A of the intermediate layer 40 facing the non-display region B. The intermediate layer 40 is formed by, for example, coating a transparent resin material that has a refractive index lower than that of the transparent substrate 30 in the wavelength range of the light used for curing the resin configuring the resin layer 20. The light shielding layer 50 is formed by printing or evaporating the above-described opaque material, for example.

In addition, for example, in FIG. 4, a transparent film 51 is bonded to the entire front surface 30A of the transparent substrate 30 with the intermediate layer 40 serving also as an adhesive layer in between. The light shielding layer 50 is provided by printing or the like, in a region of the transparent film 51 facing a non-emission region B. The intermediate layer 40 is formed of a transparent adhesive agent that has a refractive index lower than that of the transparent substrate 30 in the wavelength range of the light used for curing the resin configuring the resin layer 20.

The backlight unit 60 illustrated in FIG. 1 illuminates the display panel 10 from backside thereof directly or through an optical member such as a light guide plate, using a fluorescent tube such as a CCFL (Cold Cathode Fluorescent Lamp), a light emitting diode (LED), and the like as a light source.

The display 1 may be manufactured in the following way, for example.

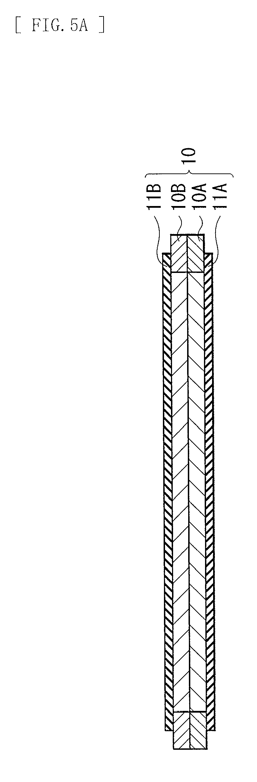

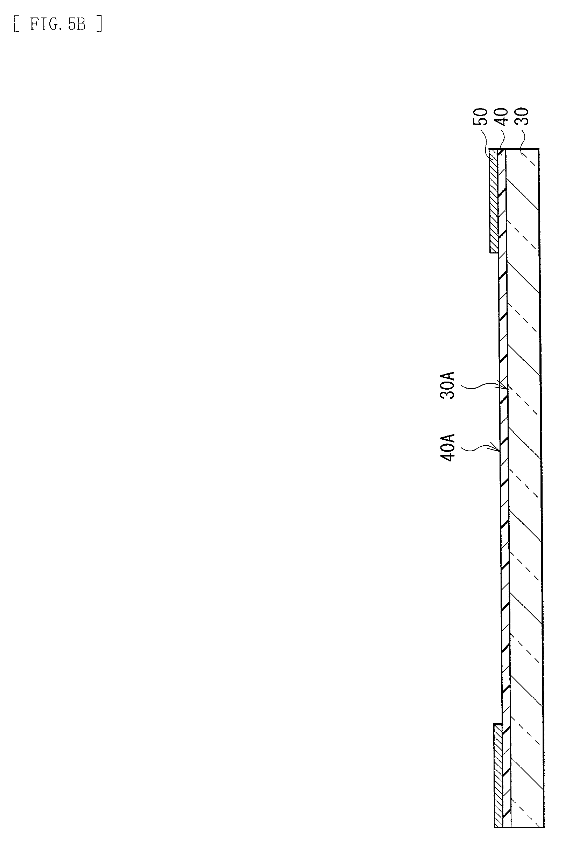

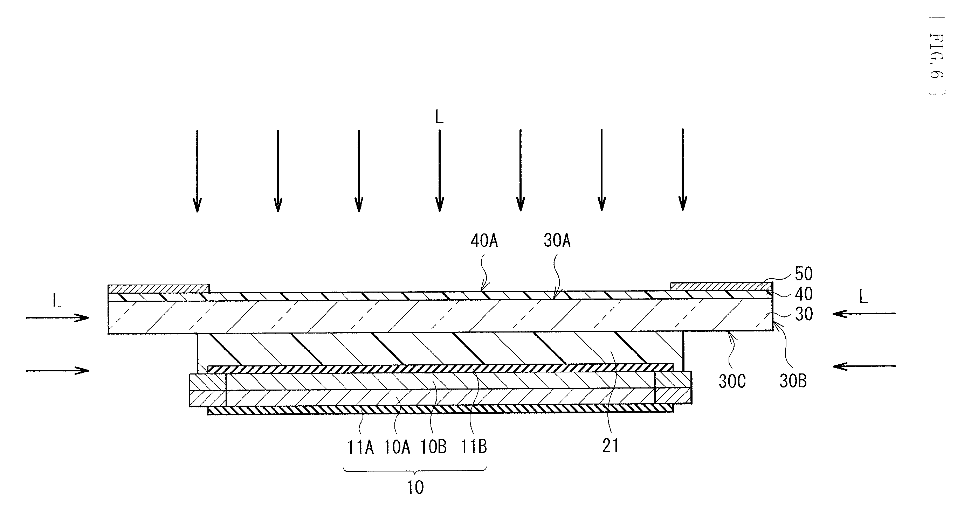

FIG. 5 and FIG. 6 illustrate a part of the method of manufacturing the display 1 in process order. First, as illustrated in FIG. 5A, the display panel 10 is fabricated. Specifically, the drive substrate 10A provided with the TFT, the drive circuit, and the like is bonded to the counter substrate 10B having the color filters with a not-illustrated liquid crystal layer in between, and then the polarizing plate 11A is bonded to the outside surface of the drive substrate 10A and the polarizing plate 11B is bonded to the outside surface of the counter substrate 10B.

On the other hand, as illustrated in FIG. 5B, the intermediate layer 40 and the light shielding layer 50 are formed in this order on the front surface 30A of the transparent substrate 30. At this time, the intermediate layer 40 is so formed as to have the refractive index lower than that of the transparent substrate 30 in the wavelength range of the light used for curing the resin of the resin layer 20.

To be more specific, for example, as illustrated in FIG. 3, the entire front surface 30A of the transparent substrate 30 is coated with a transparent resin material that has a refractive index lower than that of the transparent substrate 30 in the wavelength range of the light used for curing the resin configuring the resin layer 20 to form the intermediate layer 40. After that, for example, the above-described opaque material is dispersed or dissolved in a binder and is printed or directly evaporated on the front surface 40A of the intermediate layer 40 to provide the light shielding layer 50.

Alternatively, for example, as illustrated in FIG. 4, the transparent film 51 on which the light shielding layer 50 is printed is bonded to the entire front surface 30A of the transparent substrate 30 with the intermediate layer 40 serving also as an adhesive layer in between. The intermediate layer 40 is formed of a transparent adhesive agent that has a refractive index lower than that of the transparent substrate 30 in the wavelength range of the light used for curing the resin configuring the resin layer 20.

Note that the front surface (the surface on the observing side) of the transparent substrate 30 is preferably subjected to non-reflection treatment or low-reflection treatment. These treatments may be performed by evaporation or coating of a non-reflection material or a low-reflection material, or bonding of a non-reflection film, a low-reflection film, or the like.

Subsequently, as illustrated in FIG. 6, the display panel 10 and the transparent substrate 30 fabricated in the above-described way are overlaid with the photocurable resin 21 in between, and light L in the wavelength range curing the resin 21, for example, ultraviolet light or visible light, is applied from the front surface 30A side of the transparent substrate 30. Specifically, it is sufficient to use light having a photosensitive wavelength in a photoinitiator contained in the resin 21. In terms of productivity, however, a lamp with emission center of 365 nm or 405 nm, an LED having such an emission wavelength, or the like is preferably used. In addition, although it is only necessary to set the illuminance and the amount of the light L depending on the composition, the thickness, and the like of the resin material used for the resin 21, desirably, integral of light is set within a range of 1500 to 15000 mL/cm², and the illuminance is set within a range of 10 to 500 mW/cm².

Moreover, also as illustrated in FIG. 6, the light L is applied from a side surface 30B side of the transparent substrate 30 at the same time as the light L is applied from the front surface 30A side of the transparent substrate 30. Incidentally, the process of applying the light L from the side surface 30B side of the transparent substrate 30 may be performed at the same time as application from the front surface 30A side, or may be performed before or after application from the front surface 30A side.

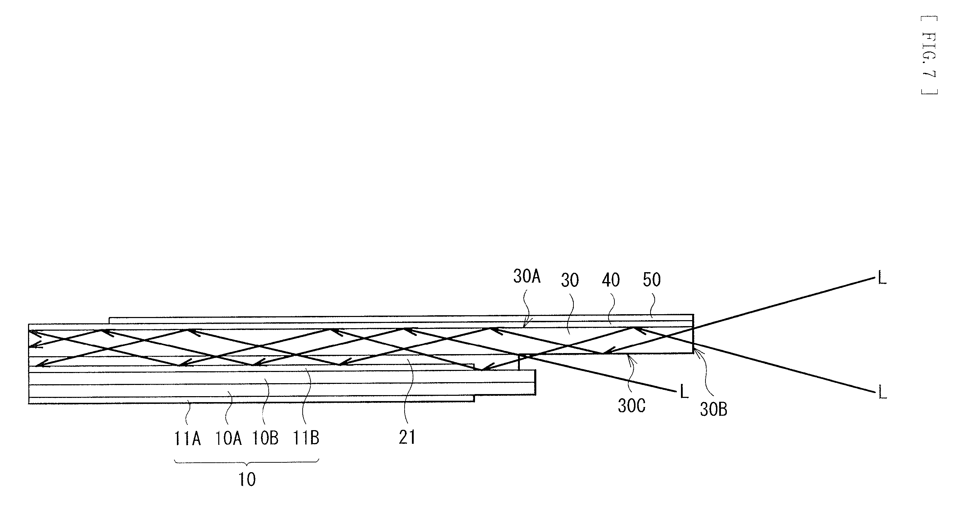

FIG. 7 illustrates a backside of the light shielding layer 50 illustrated in FIG. 6 in an enlarged manner. As illustrated in FIG. 7, the light L applied from the side surface 30B side enters the transparent substrate 30 from an end surface thereof or from a bonding section of the transparent substrate 30 and the display panel 10. Since an entering angle is extremely shallow, the light L cures the resin 21 on the backside of the light shielding layer 50 while being guided through the transparent substrate 30, to form the resin layer 20.

To be more specific, on the front surface 30A of the transparent substrate 30 (an interface between the transparent substrate 30 and the intermediate layer 40), since the refractive index of the intermediate layer 40 is lower than that of the transparent substrate 30 in the wavelength range of the light L used for curing the resin 21, the light L is totally reflected. On the other hand, on a back surface 30C of the transparent substrate 30 (an interface between the transparent substrate 30 and the resin 21), the refractive index of the resin 21 before and after curing is higher than the refractive index of the transparent substrate 30 in the wavelength range of the light L. Therefore, the light L enters the resin 21 to cure the resin 21. In addition, the light attenuated after curing the resin 21 is reflected by an interface between the polarizing plate 11B and the resin 21 (or the resin layer 20) to cure the resin 21 again.

On the other hand, when the refractive index of the resin 21 before and after curing is set to be lower than the refractive index of the transparent substrate 30 in the wavelength range of the light L, the light L is almost totally reflected by the interface between the transparent substrate 30 and the resin 21. Therefore, the light L does not enter the resin 21, and thus the resin 21 is hardly cured. Moreover, when the intermediate layer 40 is not provided and the light shielding layer 50 is provided directly on the front surface 30A or the back surface 30C of the transparent substrate 30, the light L guided through the transparent substrate 30 enters the light shielding layer 50 and is absorbed by the light shielding layer 50, and therefore the resin 21 is not efficiently cured.

As described above, to allow the light L necessary for curing the resin 21 to enter the transparent substrate 30 from the side surface 30B side thereof, characteristics capable of being cured deeply in the entering direction of the light L are demanded for the resin 21. To ensure such higher deep-section curability, acyl phosphine oxide-based photopolymerization initiator (for example, see PTLs 5 and 6) or titanocene-based photopolymerization initiator that exhibits at least photobleaching property is used as a photopolymerization initiator, and a light source containing the light L with long wavelength having higher light transmittance to the resin 21, for example, the light L within the wavelength of around 380 nm to 480 nm is used for photo-curing. Thus, the light transmittance of the resin 21 is increased and the curing of the resin 21 proceeds sequentially toward the deep position as the resin 21 is irradiated with the light.

After the transparent substrate 30 is bonded to the display panel 10 with the resin layer 20 in between in this way, the display panel 10 and the transparent substrate 30 thus bonded are placed together with the backlight unit 60 in the exterior member 70. Consequently, the display 1 illustrated in FIG. 1 is completed.

In the display 1, when the light enters from the backlight unit 60 to the display panel 10, the entering light passes through the polarizing plate 11A, and then passes through the not-illustrated liquid crystal layer while being modulated for each pixel based on a picture voltage applied between the drive substrate 10A and the counter substrate 10B. The light that has passed through the liquid crystal layer passes through the counter substrate 10B having the not-illustrated color filters, thereby being extracted to the outside of the polarizing plate 11B as color display light.

In this case, the resin layer 20 is formed of the resin 21 that has a refractive index higher than the refractive index of the transparent substrate 30 before and after curing in the wavelength range of the light L used for curing. Moreover, the intermediate layer 40 that has a refractive index lower than that of the transparent substrate 30 in the wavelength range of the light L used for curing the resin 21 is provided on the front surface 30A of the transparent substrate 30, and the light shielding layer 50 is provided on the front surface 40A of the intermediate layer 40. Therefore, the resin 21 on the backside of the light shielding layer 50 is favorably cured close to the display region A in the manufacturing process, and the curing failure of the resin layer 20 on the backside of the light shielding layer 50 is suppressed. Accordingly, leakage of liquid of uncured resin from between the display panel 10 and the transparent substrate 30 is suppressed.

Moreover, suppressing the curing failure of the resin layer 20 on the backside of the light shielding layer 50 reduces the possibility of losing the stress balance between the uncured resin 21 remained on the backside of the light shielding layer 50 and the cured resin layer 20. Therefore, it is possible to suppress occurrence of unevenness caused by variation in a cell gap (the thickness of the liquid crystal layer of the display panel 10) in the non-display region B or in the vicinity thereof. Such frame-like unevenness is markedly viewed as display unevenness particularly when a black screen is viewed from an oblique direction or on a low gray level screen, and causes significant lowering of display quality. In the present embodiment, however, occurrence of display unevenness caused by such frame-like unevenness is certainly suppressed.

As described above, in the present embodiment, the resin layer 20 is formed of the resin 21 that has a refractive index higher than the refractive index of the transparent substrate 30 before and after curing in the wavelength range of the light L used for curing. In addition, the intermediate layer 40 that has a refractive index lower than that of the transparent substrate 30 in the wavelength range of the light L used for curing the resin 21 is provided on the front surface 30A of the transparent substrate 30, and the light shielding layer 50 is provided on the front surface 40A of the intermediate layer 40. Therefore, the level relationship between the refractive indices of the resin layer 20, the transparent substrate 30, and the intermediate layer 40 is optimally adjusted, and curing failure of the resin layer 20 on the backside of the light shielding layer 50 is suppressed. Consequently, it is possible to suppress leakage of liquid of uncured resin, frame-like display unevenness in the non-display region B or in the vicinity thereof, and the like.

### (Second Embodiment)

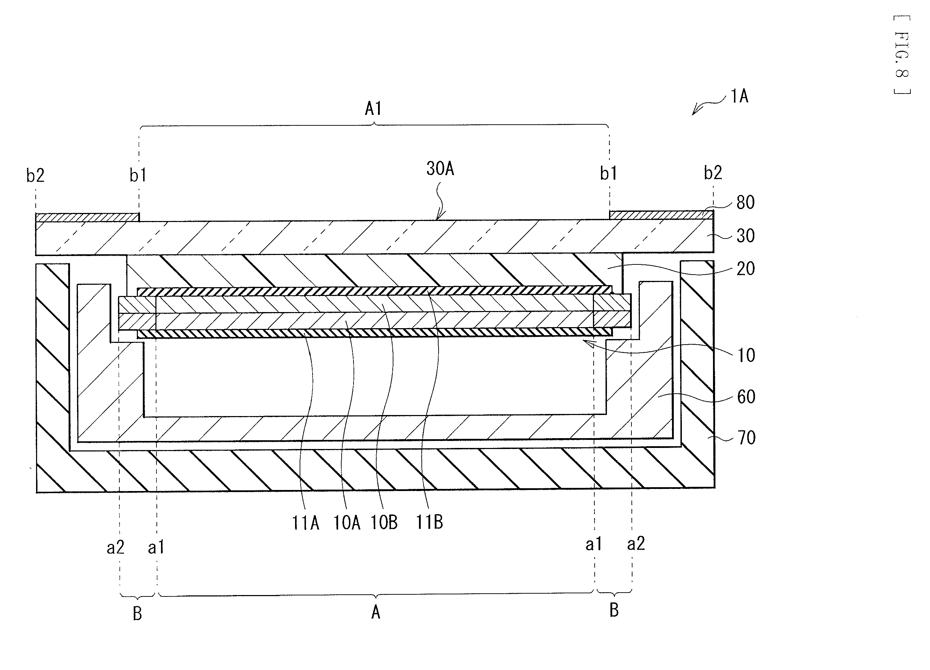

FIG. 8 schematically illustrates a cross-sectional configuration of a display according to a second embodiment of the present invention. The display 1A is not provided with the intermediate layer 40, and a light shielding layer 80 is allowed to double with the intermediate layer 40 by adjusting the refractive index of the light shielding layer 80 itself. Except for this point, the display 1A has a configuration, functions, and effects similar to those of the display 1 according to the first embodiment. Accordingly, the corresponding components will be described with the same reference numerals.

The display panel 10, the resin layer 20, the transparent substrate 30, the backlight unit 60, and the exterior member 70 are configured similarly to those of the first embodiment.

The light shielding layer 80 is provided in a region of the front surface 30A of the transparent substrate 30 facing the non-display region B, and has a refractive index lower than that of the transparent substrate 30 in the wavelength range of the light L used for curing the resin 21. Therefore, in the display 1A, it is possible to suppress curing failure of the resin layer 20 on the backside of the light shielding layer 80, similarly to the first embodiment.

Specifically, such a light shielding layer 80 is obtained by mixing or dispersing an opaque material such as carbon black, metal, pigment, and dye into a resin material that has a refractive index lower than that of the transparent substrate 30 in the wavelength range of the light L used for curing the resin 21. Examples of the resin material serving as a base material include silicone-based coating agent and acrylic coating agent that has a refractive index satisfying the above-described requirement.

The display 1A may be manufactured in the following way, for example.

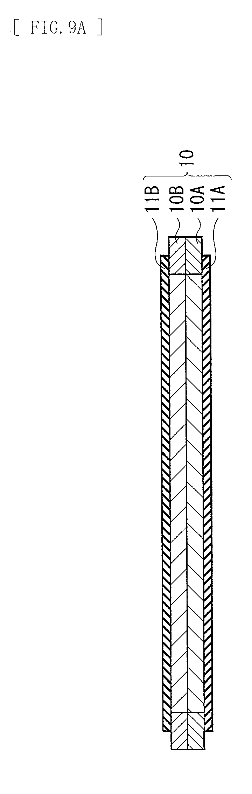

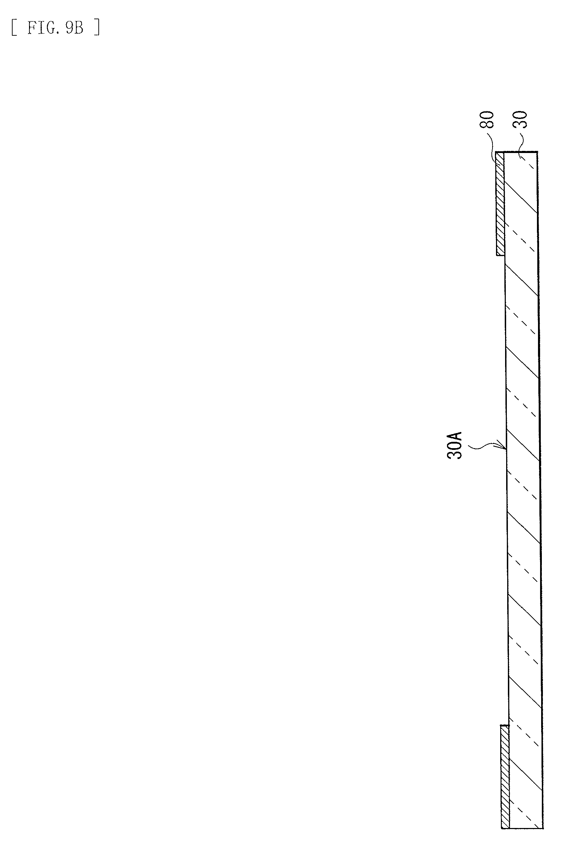

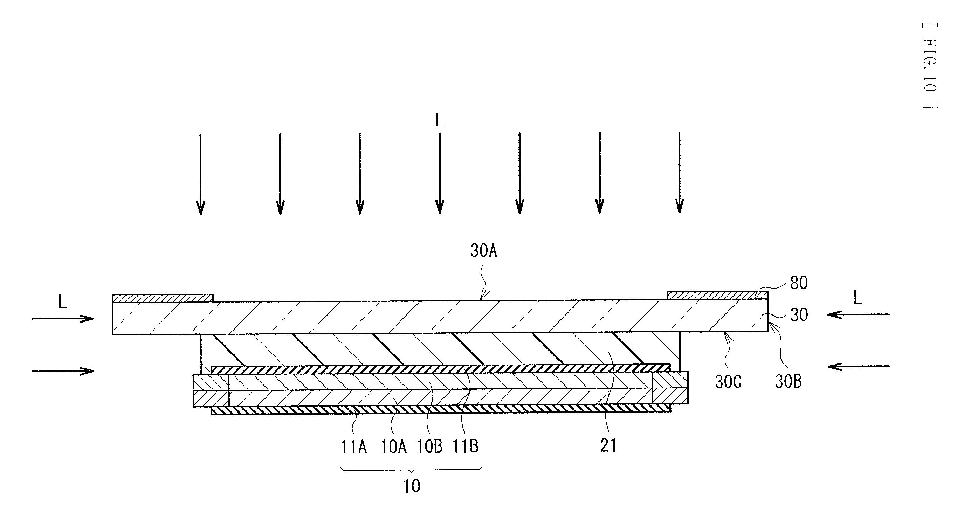

FIG. 9 and FIG. 10 illustrate a part of a method of manufacturing the display 1A in process order. First, as illustrated in FIG. 9A, the display panel 10 is fabricated in a similar way to the first embodiment. On the other hand, as illustrated in FIG. 9B, the light shielding layer 80 is formed in a region of the front surface 30A of the transparent substrate 30 facing the non-display region B. For example, application liquid in which an opaque material is mixed or dispersed in the resin material having the refractive index described above is prepared, and the application liquid is applied on the transparent substrate 30, followed by curing or drying the application liquid to form the light shielding layer 80.

Subsequently, as illustrated in FIG. 10, the display panel 10 and the transparent substrate 30 fabricated in the above way are overlaid with the photocurable resin 21 in between, and the light L within the wavelength range curing the resin 21, for example, ultraviolet light or visible light, is applied from the front surface 30A side of the transparent substrate 30 as in the first embodiment. Moreover, also as illustrated in FIG. 10, the light L is applied from the side surface 30B side of the transparent substrate 30 at the same time as the light L is applied from the front surface 30A side of the transparent substrate 30. Incidentally, the process of applying the light L from the side surface 30B side of the transparent substrate 30 may be performed at the same time as application from the front surface 30A side, or may be performed before or after application from the front surface 30A side.

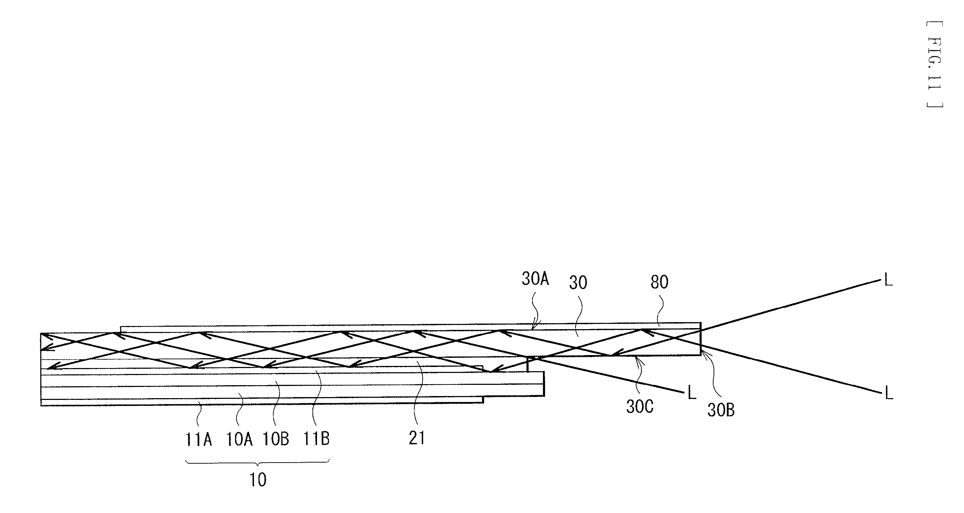

FIG. 11 illustrates a backside of the light shielding layer 80 illustrated in FIG. 10 in an enlarged manner. As illustrated in FIG. 11, the light L applied from the side surface 30B side enters the transparent substrate 30 from the end surface thereof or from a bonding section of the transparent substrate 30 and the display panel 10. Since an entering angle is extremely shallow, the light L cures the resin 21 on the backside of the light shielding layer 80 while being guided through the transparent substrate 30, to form the resin layer 20.

To be more specific, on the front surface 30A of the transparent substrate 30 (an interface between the transparent substrate 30 and the light shielding layer 80), since the refractive index of the light shielding layer 80 is lower than that of the transparent substrate 30 in the wavelength range of the light L used for curing the resin 21, the light L is totally reflected. On the other hand, on the back surface 30C of the transparent substrate 30 (an interface between the transparent substrate 30 and the resin 21), the refractive index of the resin 21 before and after curing is higher than the refractive index of the transparent substrate 30 in the wavelength range of the light used for curing. Therefore, the light L enters the resin 21 to cure the resin 21. In addition, the light attenuated after curing the resin 21 is reflected by the interface between the polarizing plate 11B and the resin 21 (or the resin layer 20) to cure the resin 21 again.

On the other hand, when the refractive index of the resin 21 before and after curing is set to be lower than the refractive index of the transparent substrate 30 in the wavelength range of the light L, the light L is almost totally reflected by the interface between the transparent substrate 30 and the resin 21. Therefore, the light L does not enter the resin 21, and thus the resin 21 is hardly cured. Moreover, when the light shielding layer 80 is provided on the back surface 30C of the transparent substrate 30, the light L guided through the transparent substrate 30 enters the light shielding layer 80 and is absorbed by the light shielding layer 80, and therefore the resin 21 is not efficiently cured.

Note that, in the process, to allow the light L necessary for curing the resin 21 to enter from the side surface 30B side of the transparent substrate 30, it is desirable that deep-section curability of the resin 21 be ensured as in the first embodiment.

After the transparent substrate 30 is bonded to the display panel 10 with the resin layer 20 in between in this way, the display panel 10 and the transparent substrate 30 thus bonded are placed together with the backlight unit 60 in the exterior member 70. Consequently, the display 1A illustrated in FIG. 8 is completed.

In the display 1A, when the light enters from the backlight unit 60 to the display panel 10, the entering light is modulated for each pixel and is extracted to the outside of the polarizing plate 11B as color display light, similarly to that of the first embodiment.

In this case, the resin layer 20 is formed of the resin 21 that has a refractive index higher than the refractive index of the transparent substrate 30 before and after curing in the wavelength range of the light L used for curing. Moreover, the light shielding layer 80 that has a refractive index lower than that of the transparent substrate 30 in the wavelength range of the light L used for curing the resin 21 is provided on the front surface 30A of the transparent substrate 30. Therefore, the resin 21 on the backside of the light shielding layer 80 is favorably cured close to the display region A in the manufacturing process, and curing failure of the resin layer 20 on the backside of the light shielding layer 80 is suppressed. Accordingly, leakage of liquid of uncured resin from between the display panel 10 and the transparent substrate 30 is suppressed.

Moreover, suppressing the curing failure of the resin layer 20 on the backside of the light shielding layer 80 reduces the possibility of losing the stress balance between the uncured resin 21 remained on the backside of the light shielding layer 80 and the cured resin layer 20. Therefore, it is possible to suppress occurrence of unevenness caused by variation in the cell gap (the thickness of the liquid crystal layer of the display panel 10) in the non-display region B or in the vicinity thereof. Such frame-like unevenness is markedly viewed as display unevenness particularly when a black screen is viewed from an oblique direction or on a low gray level screen, and causes significant lowering of display quality. In the present embodiment, however, occurrence of display unevenness caused by such frame-like unevenness is certainly suppressed.

As described above, in the present embodiment, the resin layer 20 is formed of the resin 21 that has a refractive index higher than the refractive index of the transparent substrate 30 before and after curing in the wavelength range of the light L used for curing. In addition, the light shielding layer 80 that has a refractive index lower than that of the transparent substrate 30 in the wavelength range of the light L used for curing the resin 21 is provided on the front surface 30A of the transparent substrate 30. Therefore, the level relationship between the refractive indices of the resin layer 20, the transparent substrate 30, and the light shielding layer 80 is optimally adjusted, and the curing failure of the resin layer 20 on the backside of the light shielding layer 80 is suppressed. Consequently, it is possible to suppress leakage of liquid of uncured resin, frame-like display unevenness in the non-display region B or in the vicinity thereof, and the like.

### (Third Embodiment)

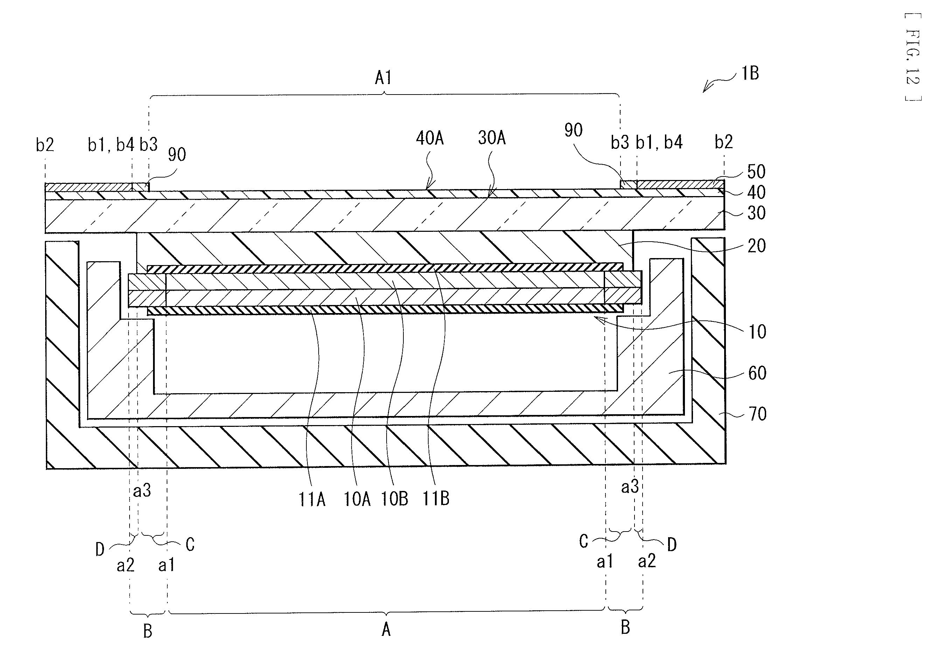

FIG. 12 schematically illustrates a cross-sectional configuration of a display according to a third embodiment of the present invention. The display 1B is provided with a semi-transmissive layer 90 along the edge b1 on the inner side of the light shielding layer 50. Except for this point, the display 1B has a configuration, functions, and effects similar to those of the display 1 according to the first embodiment. Therefore, the corresponding components will be described with the same reference numerals.

The display panel 10, the resin layer 20, the transparent substrate 30, the intermediate layer 40, the backlight unit 60, and the exterior member 70 are configured similarly to those of the first embodiment.

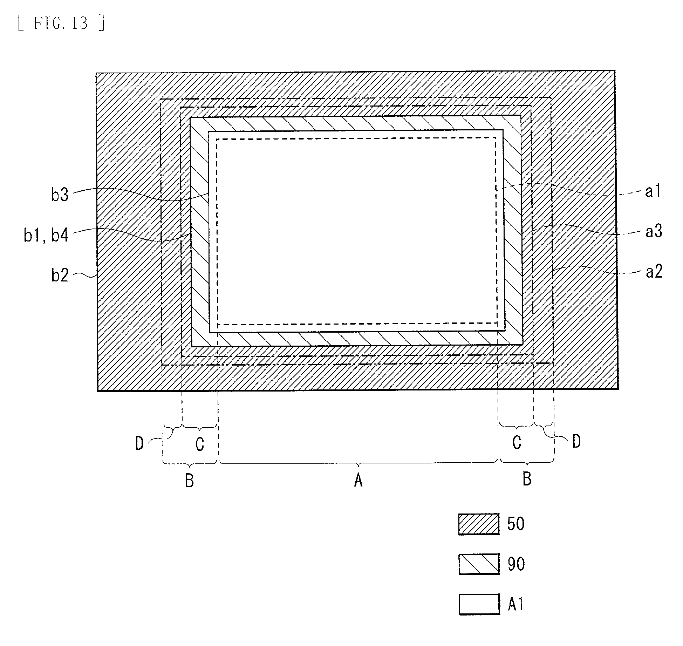

FIG. 13 illustrates a planar configuration of the display 1B illustrated in FIG. 12 as viewed from the light shielding layer 50 side. The non-display region B of the display panel 10 includes a region C where shielding of light from the backlight unit 60 is necessary (a backlight shielding region; a frame-like region outside the boundary a1 and inside the boundary a3) and a region D where shielding is unnecessary (a backlight non-shielding region; a frame-like region outside the boundary a3 and inside the edge a2 of the display panel 10).

The semi-transmissive layer 90 is provided to have a rectangular frame-like shape in a region between a region of the front surface 40A of the intermediate layer 40 facing the display region A (the light transmissive section A1) and the light shielding layer 50. An edge b3 on the display region A side of the semi-transmissive layer 90 is disposed outside the boundary a1 (on the non-display region B side). On the other hand, an edge b4 on the light shielding layer 50 side of the semi-transmissive layer 90 (a boundary between the semi-transmissive layer 90 and the light shielding layer 50) is disposed inside the boundary a3 (on the backlight shielding region C side). In other words, the semi-transmissive layer 90 is provided in the backlight shielding region C. With this arrangement, it is possible to avoid leakage of light from the backlight unit 60 through the semi-transmissive layer 90.

Incidentally, the position of the edge b4 on the light shielding layer 50 side of the semi-transmissive layer 90 is not particularly limited, and may be disposed outside the boundary a3 (on the backlight non-shielding region D side). For example, even in the backlight non-shielding region D (outside the boundary a3), the light is allowed to be shielded with use of other shielding member. Therefore, in such a case, the edge b4 of the semi-transmissive layer 90 may be in the backlight non-shielding region D. Moreover, the edge b3 of the semi-transmissive layer 90 may overlap with the boundary a1. Further, the flat dimension of the semi-transmissive layer 90 may be equal to the flat dimension of the backlight shielding region C (the edge b3 and the edge b4 may overlap with the boundary a1 and the boundary a3, respectively).

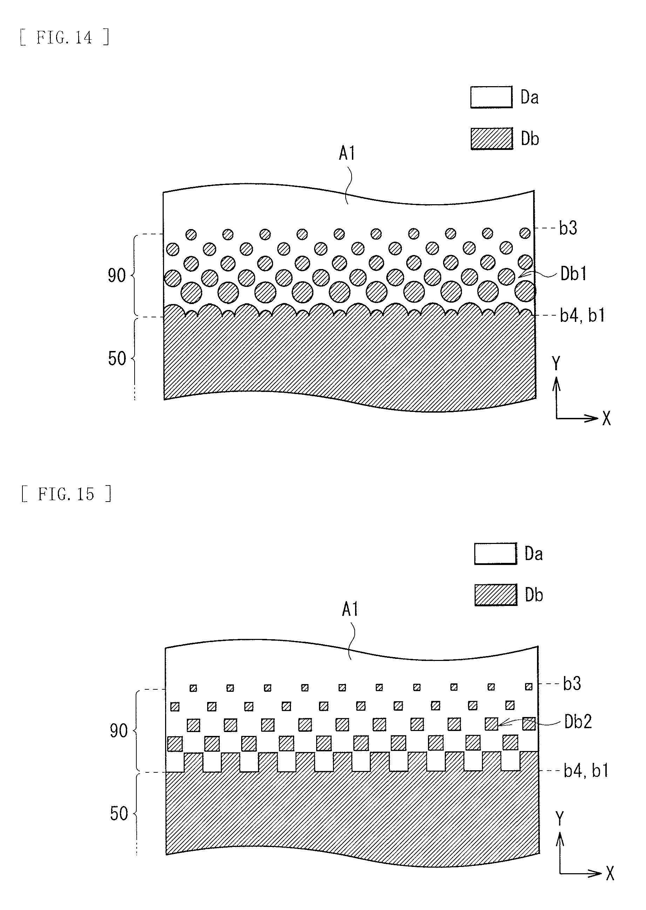

FIG. 14 to FIG. 17 each illustrate an example of a planar configuration (XY plane configuration) of the semi-transmissive layer 90 on the transparent substrate 30 near the edges b3 and b4. In the light shielding layer 50, the entire region of the light shielding layer 50 on the transparent substrate 30 is an opaque region Db. In the semi-transmissive layer 90, selective regions in the semi-transmissive layer 90 on the transparent substrate 30 are the opaque region Db, and the other region is a transparent region Da. The opaque region Db has a thickness of, for example, 0.1 µm to 100 and is formed of an opaque material such as carbon black, metal, pigment, and dye. On the other hand, the transparent region Da is formed of the transparent substrate 30 itself. The semi-transmissive layer 90 exhibits semi-transmissive property by the fact that the opaque region Db and the transparent region Da are mixedly present in the plane, and the light transmittance thereof corresponds to area ratio of the opaque region Db (the opaque region Db/(the transparent region Da+the opaque region Db)). Accordingly, the light transmittance of the semi-transmissive layer 90 is lower than that of the transparent substrate 30, and is higher than that of the light shielding layer 50. Note that the light transmittance of the semi-transmissive layer 90 may be uniform (constant) in the semi-transmissive layer 90, or may be varied in the semi-transmissive layer 90 as follows.

To be more specific, as illustrated in FIG. 14, in the semi-transmissive layer 90, for example, a plurality of circle-shaped opaque regions Db (circular regions Db1) are formed in a repeating pattern, and the size of each of the circle is gradually increased from the edge b3 toward the edge b4, namely, from the light transmissive section Al side toward the light shielding layer 50 side. In other words, the area ratio of the opaque region Db (the opaque region Db/(the transparent region Da+the opaque region Db)) is gradually increased from the light transmissive section Al side toward the light shielding layer 50 side (an area occupied by the opaque region Db is gradually increased). As a result, the light transmittance is gradually decreased from the light transmissive section A1 side toward the light shielding layer 50 side.

Although each of the circular regions Db1 is desirably small in terms of design, if it is too small, it is difficult to form the opaque region Db. Therefore, in the semi-transmissive layer 90, the size of the circular region Db1 (the XY plane dimension) is desirably a diameter of about 0.1 mm to about 2 mm in view of balancing opacity and design. In addition, the size of the plurality of circular regions Db1 in the semi-transmissive layer 90 is desirably varied in about three to ten levels within such a range. For example, the circular regions Db1 are arranged at intervals of 1.5 mm in the X direction (in a lateral direction of the paper in FIG. 14), as well as are arranged at intervals of 1.0 mm in the Y direction (in a vertical direction of the paper in FIG. 14) while the diameter is allowed to change to 0.7, 0.8, 0.9, 1.0, 1.1, and 1.2 (mm) in a stepwise fashion from the light transmissive section Al side toward the light shielding layer 50 side (from the top to the bottom of the paper in FIG. 14). In addition, the circular regions Db1 with the same size are arranged in the X direction, and the circular regions Db1 are arranged (alternately) in the Y direction so that adjacent circular regions Db1 do not overlap with each other. In this example, the light transmittance is about 70% on the light transmissive section Al side and is about 20% on the light shielding layer 50 side.

Incidentally, the planar shape (XY plane shape) of the opaque region in the semi-transmissive layer 90 is not limited to the above-described circular shape, and may be a square shape as illustrated in FIG. 15. Also in this case, in view of balancing with design described above, the length of one side of the square opaque region (square region Db2) is desirably about 0.1 mm to about 2 mm. In addition, the size of the plurality of square regions Db2 is desirably varied in about three to ten levels within such a range. For example, the square regions Db2 are arranged at intervals of 1.5 mm in the X direction (in the lateral direction of the paper in FIG. 15), as well as are arranged at intervals of 1.0 mm in the Y direction (in the vertical direction of the paper in FIG. 15) while one side of the square is allowed to change to 0.5, 0.6, 0.8, and 1.0 (mm) in a stepwise fashion from the light transmissive section A1 side toward the light shielding layer 50 side (from the top to the bottom of the paper in FIG. 14). In addition, the square regions Db2 with the same size are arranged in the X direction, and the square regions Db2 are arranged (alternately) in the Y direction so that adjacent square regions Db2 do not overlap with each other. In this example, the light transmittance is about 70% on the light transmissive section Al side, and is about 20% on the light shielding layer 50 side.

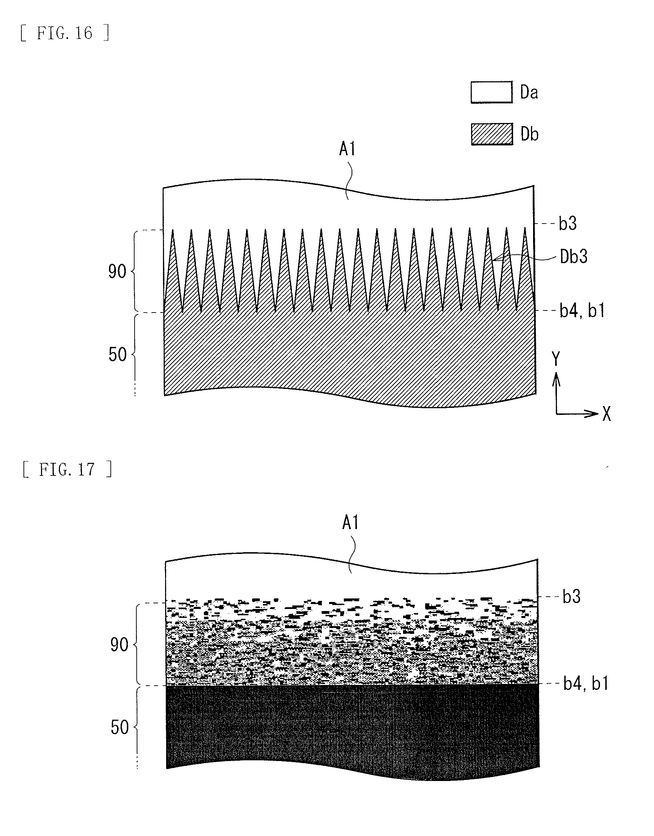

Moreover, it is not limited to the circular shape and the square shape described above, and other polygonal shapes such as triangular shape and rectangular shape may be employed. Alternatively, as illustrated in FIG. 16, the opaque region Db of the semi-transmissive layer 90 may be formed of a plurality of isosceles triangle opaque regions (triangle regions Db3) arranged in one direction (the entire shape may be a sawtooth shape). For example, the opaque region Db illustrated in FIG. 16 has a configuration in which the isosceles triangle opaque regions (the triangle regions Db3) having a base width of 1.5 mm and a height of 4 mm are arranged at intervals of 1.5 mm along the X direction (in the lateral direction of the paper in FIG. 16). In this example, the light transmittance is 100% on the light transmissive section Al side, and is 0% on the light shielding layer 50 side. With such a configuration, it is possible to gradually decrease the light transmittance from the light transmissive section Al side toward the light shielding layer 50 side.

Furthermore, the semi-transmissive layer 90 does not necessarily have a regular pattern, and for example, as illustrated in FIG. 17, may have a planar configuration in which a plurality of minute opaque regions are discretely arranged so that the light transmittance gradually decreases from the light transmissive section Al side toward the light shielding layer 50 side. Note that, in FIG. 17, a section illustrated by black color corresponds to the opaque region.

In addition, the semi-transmissive layer 90 may be formed of opaque regions having the predetermined shapes arranged irregularly (at random). Moreover, the planar shapes of the opaque regions are not necessarily the same as one another, and may include different shapes from one another. Incidentally, in any case, the area ratio of the opaque region described above is desirably small on the light transmissive section Al side and is desirably large on the light shielding layer 50 side. In other words, the light transmittance in a region provided with the semi-transmissive layer 90 is desirably high on the light transmissive section A1 side and is desirably low on the light shielding layer 50 side. Further, more desirably, the area ratio of the opaque region described above in the semi-transmissive layer 90 is gradually increased, and the light transmittance is gradually decreased from the light transmissive section A1 side toward the light shielding layer 50 side. This is because stress balance between uncured resin and cured resin can be easily held favorable.

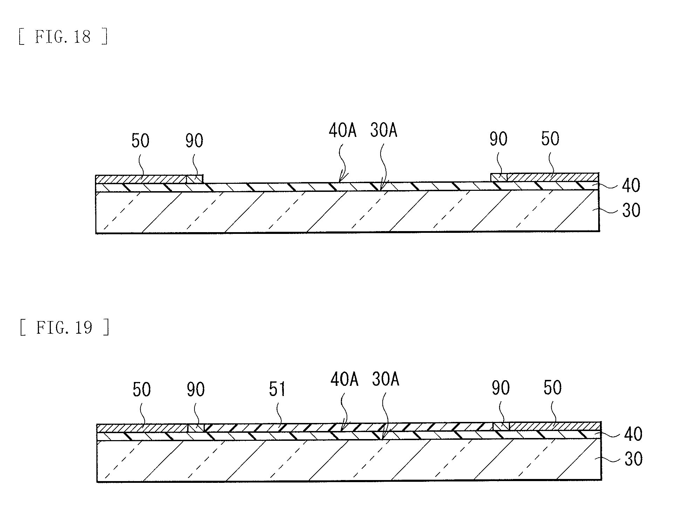

FIG. 18 and FIG. 19 each illustrate a specific configuration example of the transparent substrate 30, the intermediate layer 40, the light shielding layer 50, and the semi-transmissive layer 90. For example, in FIG. 18, the intermediate layer 40 is provided on the entire front surface 30A of the transparent substrate 30, and the light shielding layer 50 and the semi-transmissive layer 90 are provided in a region of the front surface 40A of the intermediate layer 40 facing the non-emission region B. For example, the intermediate layer 40 is formed by coating a transparent resin material that has a refractive index lower than that of the transparent substrate 30 in the wavelength range of the light used for curing the resin configuring the resin layer 20. The light shielding layer 50 and the opaque region Db of the semi-transmissive layer 90 are formed by, for example, printing or evaporating.

In addition, for example in FIG. 19, the transparent film 51 is bonded to the entire front surface 30A (the surface on the light emission side) of the transparent substrate 30 with the intermediate layer 40 serving also as an adhesive layer in between. The light shielding layer 50 and the opaque region Db of the semi-transmissive layer 90 are provided by printing or the like, in a region of the transparent film 51 facing the non-emission region B. The intermediate layer 40 is formed of a transparent adhesive agent that has a refractive index lower than that of the transparent substrate 30 in the wavelength range of the light used for curing the resin configuring the resin layer 20.

The display 1B may be manufactured in the following way, for example. Incidentally, the processes overlapping with those in the first embodiment will be described with reference to FIG. 5 to FIG. 7.

First, similarly to the first embodiment, the display panel 10 is fabricated in the process illustrated in FIG. 5A.

On the other hand, the intermediate layer 40, the light shielding layer 50, and the semi-transmissive layer 90 are formed in this order on the front surface 30A of the transparent substrate 30. At this time, the intermediate layer 40 is so formed as to have the refractive index smaller than that of the transparent substrate 30 in the wavelength of the light used for curing the resin of the resin layer 20.

To be more specific, for example, as illustrated in FIG. 18, the intermediate layer 40 is formed on the entire front surface 30A of the transparent substrate 30 by coating a transparent resin material that has a refractive index lower than that of the transparent substrate 30 in the wavelength range of the light used for curing the resin configuring the resin layer 20. After that, for example, the above-described opaque material is dispersed or dissolved in a binder and is then printed, or is directly deposited on the front surface 40A of the intermediate layer 40, to provide the light shielding layer 50 and the opaque region Db of the semi-transmissive layer 90.

At this time, in the light shielding layer 50, the opaque material is solidly evaporated or printed on the transparent substrate 30 to make the entire light shielding layer 50 into an opaque region.

On the other hand, on the semi-transmissive layer 90, the opaque material is evaporated or printed in a selective region on the transparent substrate 30 to make the selective region and the other region in the semi-transmissive layer 90 into an opaque region and a transparent region, respectively. When the semi-transmissive layer 90 is formed by evaporation, it is sufficient for an evaporation mask to use a mask having openings that correspond to the repeating pattern of the opaque region described above. Alternatively, when the semi-transmissive layer 90 is formed by printing, it is sufficient to use a printing plate corresponding to the repeating pattern of the opaque region described above by, for example, screen printing or offset printing.

Alternatively, for example, as illustrated in FIG. 19, the transparent film 51 on which the light shielding layer 50 and the opaque region Db of the semi-transmissive layer 90 are printed is bonded to the entire front surface 30A of the transparent substrate 30 with the intermediate layer 40 serving also as an adhesive layer in between. The intermediate layer 40 is formed of a transparent adhesive agent that has a refractive index lower than that of the transparent substrate 30 in the wavelength range of the light used for curing the resin configuring the resin layer 20.

Subsequently, similarly to the first embodiment, the display panel 10 and the transparent substrate 30 are overlaid with the photocurable resin 21 in between in the processes illustrated in FIG. 6 and FIG. 7. After that, the light L within wavelength range curing the resin 21, for example, ultraviolet light or visible light, is applied from the front surface 30A side and the side surface 30B side of the transparent substrate 30 to cure the resin 21, thereby forming the resin layer 20.

At this time, the semi-transmissive layer 90 is provided in a region between the region of the front surface 40A of the intermediate layer 40 facing the display region A (the light transmissive section A1) and the light shielding layer 50, and the light transmittance of the semi-transmissive layer 90 is higher than that of the light shielding layer 50. Therefore, the semi-transmissive layer 90 is cured by the light L that has been guided through the transparent substrate 30, and at the same time, is cured by the light L entering from the front surface 30A side of the transparent substrate 30. Accordingly, if the width of the non-display region B is large, uncuring of the resin 21 is reduced on the backside of the semi-transmissive layer 90, and the curing failure of the resin layer 20 on the backside of the light shielding layer 50 and the semi-transmissive layer 90 is suppressed. In addition, drastic change in resin characteristics between the cured section and the uncured section of the resin 21 is suppressed. Therefore, stress balance around the display region A is held favorable, and occurrence of frame-like unevenness due to variation in the cell gap (the thickness of the liquid crystal layer of the display panel 10) is suppressed. Moreover, in a region around the display region A, light shielding property of the transparent substrate 30 is not largely impaired.

After the transparent substrate 30 is bonded to the display panel 10 with the resin layer 20 in between, the display panel 10 and the transparent substrate 30 thus bonded are placed together with the backlight unit 60 in the exterior member 70. Consequently, the display 1B illustrated in FIG. 12 is completed.

In the display 1B, when the light enters the display panel 10 from the backlight unit 60, the entering light is modulated for each pixel and is extracted to the outside of the polarizing plate 11B as color display light, similarly to that of the first embodiment.

In this case, the semi-transmissive layer 90 is provided in the region between the region of the front surface 40A of the intermediate layer 40 facing the display region A (the light transmissive section A1) and the light shielding layer 50. Therefore, the resin 21 on the backside of the light shielding layer 50 is favorably cured close to the display region A in the manufacturing process, as well as the resin 21 on the backside of the semi-transmissive layer 90 is favorably cured. Thus, the curing failure of the resin layer 20 on the backside of the light shielding layer 50 and the semi-transmissive layer 90 is suppressed. Accordingly, leakage of liquid of uncured resin from between the display panel 10 and the transparent substrate 30 is suppressed even if the width of the non-display region B is large.

Moreover, suppressing the curing failure of the resin layer 20 on the backside of the light shielding layer 50 and the semi-transmissive layer 90 reduces the possibility of losing the stress balance between the uncured resin 21 remained on the backside of the light shielding layer 50 and the semi-transmissive layer 90 and the cured resin layer 20. Therefore, it is possible to suppress occurrence of the frame-like unevenness due to variation in the cell gap (the thickness of the liquid crystal layer of the display panel 10) in the non-display region B or in the vicinity thereof to cause the display unevenness.

As described above, in the present embodiment, the semi-transmissive layer 90 is provided in the region between the region of the front surface 40A of the intermediate layer 40 facing the display region A (the light transmissive section A1) and the light shielding layer 50. Therefore, it is possible to suppress the curing failure of the resin layer 20 on the backside of the light shielding layer 50 and the semiconductor layer 90. Consequently, possibility of leakage of liquid of uncured resin is allowed to be extremely reduced, and it is advantageous particularly when the width of the non-display region B is large.

In addition, it is possible to suppress occurrence of unevenness in thickness of the liquid crystal layer of the display panel 10 and to suppress occurrence of display unevenness around the display region A without large loss of light shielding property around the display region A. Consequently, the display quality is improved, and picture display with high image quality is achievable.

### (Modification 1)

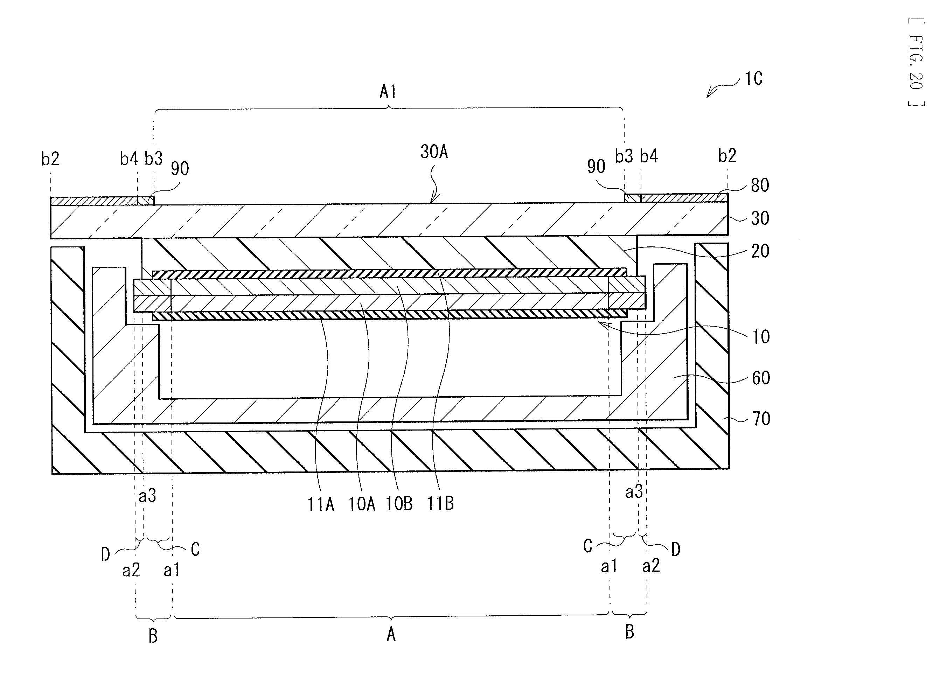

Note that as illustrated in FIG. 20, the third embodiment is applicable to a display 1C provided with the light shielding layer 80 of the second embodiment in place of the intermediate layer 40 and the light shielding layer 50. Specifically, the semi-transmissive layer 90 may be provided in a region between the region of the front surface 30A of the transparent substrate 30 facing the display region A (the light transmissive section A1) and the light shielding layer 80, and the light transmittance of the semi-transmissive layer 90 may be lower than that of the transparent substrate 30 and higher than that of the light shielding layer 80. In this case, similarly to the light shielding layer 80, the semi-transmissive layer 90 is set to have the refractive index lower than that of the transparent substrate 30 in the wavelength range of the light L used for curing the resin 21.

### Examples

Hereinafter, specific examples of the present invention will be described.

### (Experimental Example 1)

A display was fabricated in a similar way to the first embodiment. First, the display panels 10 of transmissive VA type having a display size of 46 inches and 55 inches in diagonal dimensions were prepared (see FIG. 5A). Each of the display panels 10 was provided with the non-display region B having a width of 11 mm around the display region A (see FIG. 2).

Subsequently, the transparent substrate 30 was overlaid on the display panel 10 with the ultraviolet curable resin 21 having the thickness of 100 µm in between (see FIG. 6). At this time, five kinds of resins A to E with different refractive indices around a wavelength of 400 nm were used as the resin 21. The refractive index in a liquid state before curing and the refractive index in a solid state after curing of each of the resins A to E are illustrated in Table 1. A mixture of bis(acyl)phosphine oxide and 1-hydroxycyclohexyl phenyl ketone was used as a polymerization initiator of the resin 21.

**[Table 1]**

| Resin | Kind of material | Storage elastic modulus | Cure shrinkage | Refractive index of liquid (around 400 nm) | Refractive index of solid (around 400 nm) |
|---|---|---|---|---|---|
| Resin A | Acrylic UV curable resin containing urethane acrylate as main component | 6×10⁴Pa | 1.4% | 1.46 | 1.48 |
| Resin B | Acrylic UV curable resin containing urethane acrylate as main component | 4×10⁴Pa | 1.5% | 1.48 | 1.50 |
| Resin C | Acrylic UV curable resin containing butadiene polymer as main component | 5×10⁴Pa | 1.4% | 1.51 | 1.53 |
| Resin D | Acrylic UV curable resin containing butadiene polymer as main component | 5×10⁴Pa | 1.6% | 1.53 | 1.55 |
| Resin E | Acrylic UV curable resin containing isoprene polymer as main component | 6×10⁴Pa | 1.5% | 1.54 | 1.56 |

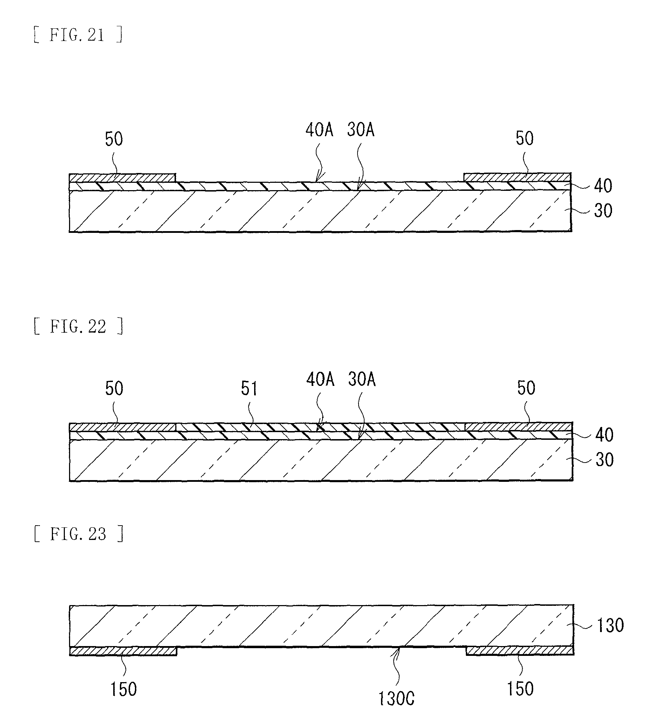

A glass having a refractive index of 1.52 around a wavelength of 400 nm was used as the transparent substrate 30. As illustrated in FIG. 21, after the intermediate layer 100 was formed on the entire front surface 30A of the transparent substrate 30, the light shielding layer 50 was provided in the region of the front surface 40A of the intermediate layer 40 facing the non-display region B. At this time, coating layers P, Q, and R with the thickness of about 20 µm made of three kinds of resins with different refractive indices were formed as the intermediate layer 40. The coating layer P was formed using a silicone-based coating agent. The refractive index thereof around the wavelength of 400 nm was 1.46. The coating layer Q was formed using an acryl-based coating agent. The refractive index thereof around the wavelength of 400 nm was 1.48. The coating layer R was formed using a styrene-based coating agent. The refractive index thereof around the wavelength of 400 nm was 1.56.

Subsequently, ultraviolet ray was applied from the front surface 30A side and the side surface 30B side of the transparent substrate 30 to form the resin layer 20 (see FIG. 6 and FIG. 7). At this time, a metal halide lamp that has strong emission peak at the wavelength of 365 nm and 405 nm and has illuminance of 100 mW/cm² was used as the irradiation light source, and the application time was one minute.

### (Experimental Example 2)

The display panels 10 similar to those in the experimental example 1 were prepared, and the transparent substrate 30 was overlaid on each of the display panels 10 with the ultraviolet curable resin 21 with the thickness of 100 µm in between. At this time, the resins A to E similar to those in the experimental example 1 were used as the resin 21.

A glass having the refractive index of 1.52 around the wavelength of 400 nm was used as the transparent substrate 30 as in the experimental example 1. As illustrated in FIG. 22, the transparent film 51 formed of PET (polyethylene terephthalate) on which the light shielding layer 50 was printed was bonded to the entire front surface 30A of the transparent substrate 30 with the intermediate layer 40 serving also as an adhesive layer S, T, or U in between. The adhesive layer S was formed using a silicone-based adhesive agent. The refractive index thereof around the wavelength of 400 nm was 1.46. The adhesive layer T was formed using an acryl-based adhesive agent. The refractive index thereof around the wavelength of 400 nm was 1.49. The adhesive layer U was formed using a urethane-based adhesive agent. The refractive index thereof around the wavelength of 400 nm was 1.53.

Subsequently, similarly to the experimental example 1, ultraviolet ray was applied from the front surface 30A side and the side surface 30B side of the transparent substrate 30.

### (Comparative Example 1)

A display panel similar to that in the experimental example 1 was prepared, and a transparent substrate was overlaid on the display panel with ultraviolet curable resin with a thickness of 100 µm in between. At this time, the resin E as in the experimental example 1 was used as the resin.

A glass having the refractive index of 1.52 around the wavelength of 400 nm was used as the transparent substrate, as in the experimental example 1. As illustrated in FIG. 23, a light shielding layer 150 was provided by printing in a region of a back surface 130C (on a side bonded to the display panel) of a transparent substrate 130 facing the non-display region B.

Subsequently, similarly to the experimental example 1, ultraviolet ray was applied from a front surface 130A side and a side surface 130B side of the transparent substrate 130.

### (Evaluation Results)

Presence or absence of display unevenness was examined for the obtained displays of the experimental examples 1 and 2 and the comparative example 1. The results are illustrated in Table 2 to Table 7. Incidentally, in Table 2 to Table 7, a circle indicates that the display unevenness is not observed, a triangle indicates that frame-like unevenness is slightly observed, and a cross indicates that frame-like unevenness is strong and image quality is deteriorated.

**[Table 2]**

| Experimental Example 1: screen size (diagonal dimensions) 46 inches | | | | | |
|---|---|---|---|---|---|
| Experimental example 1 | Resin A | Resin B | Resin C | Resin D | Resin E |
| Coating layer P | Cross | Cross | Triangle | Circle | Circle |
| Coating layer Q | Cross | Cross | Triangle | Circle | Circle |
| Coating layer R | Cross | Cross | Cross | Cross | Cross |

| | | | | | |
|---|---|---|---|---|---|
| Circle: Display unevenness is not observed. Triangle: Frame-like unevenness is slightly observed. Cross: Frame-like unevenness is strong and image quality is deteriorated. | | | | | |

**[Table 3]**

| Experimental Example 1: screen size (diagonal dimensions) 55 inches | | | | | |
|---|---|---|---|---|---|
| Experimental example 1 | Resin A | Resin B | Resin C | Resin D | Resin E |
| Coating laver P | Cross | Cross | Triangle | Circle | Circle |
| Coating laver Q | Cross | Cross | Triangle | Circle | Circle |
| Coating layer R | Cross | Cross | Cross | Cross | Cross |

| | | | | | |
|---|---|---|---|---|---|
| Circle: Display unevenness is not observed. Triangle: Frame-like unevenness is slightly observed. Cross: Frame-like unevenness is strong and image quality is deteriorated. | | | | | |

**[Table 4]**

| Experimental Example 2: screen size (diagonal dimensions) 46 inches | | | | | |
|---|---|---|---|---|---|
| Experimental example 2 | Resin A | Resin B | Resin C | Resin D | Resin E |
| Adhesive layer S | Cross | Cross | Triangle | Circle | Circle |
| Adhesive layer T | Cross | Cross | Triangle | Circle | Circle |
| Adhesive layer U | Cross | Cross | Cross | Cross | Cross |

| | | | | | |
|---|---|---|---|---|---|
| Circle: Display unevenness is not observed. Triangle: Frame-like unevenness is slightly observed. Cross: Frame-like unevenness is strong and image quality is deteriorated. | | | | | |

**[Table 5]**

| Experimental Example 2: screen size (diagonal dimensions) 55 inches | | | | | |
|---|---|---|---|---|---|
| Experimental example 2 | Resin A | Resin B | Resin C | Resin D | Resin E |
| Adhesive layer S | Cross | Cross | Triangle | Circle | Circle |
| Adhesive layer T | Cross | Cross | Triangle | Circle | Circle |
| Adhesive layer U | Cross | Cross | Cross | Cross | Cross |

| | | | | | |
|---|---|---|---|---|---|
| Circle: Display unevenness is not observed. Triangle: Frame-like unevenness is slightly observed. Cross: Frame-like unevenness is strong and image quality is deteriorated. | | | | | |

**[Table 6]**

| Comparative Example: screen size (diagonal dimensions) 46 inches | |
|---|---|
| Comparative example | Resin E |
| | Cross |

| | |
|---|---|
| Circle: Display unevenness is not observed. Triangle: Frame-like unevenness is slightly observed. Cross: Frame-like unevenness is strong and image quality is deteriorated. | |

**[Table 7]**

| Comparative Example: screen size (diagonal dimensions) 55 inches | |
|---|---|
| Comparative example | Resin E |
| | Cross |

| | |
|---|---|
| Circle: Display unevenness is not observed. Triangle: Frame-like unevenness is slightly observed. Cross: Frame-like unevenness is strong and image quality is deteriorated. | |

In addition, the display panel 10 and the transparent substrate 30 bonded were broken away, the resin layer 20 in the section of the display panel 10 corresponding to the display region A and the resin layer 20 in the section (on the backside of the light shielding layer 50) corresponding to the non-display region B were obtained, and reaction rate was calculated from carbonyl absorption peak of FTIR spectrum. The results are illustrated in Table 8 to Table 13.

**[Table 8]**

| Experimental Example 1: screen size (diagonal dimensions) 46 inches | | | | | | | | | | |
|---|---|---|---|---|---|---|---|---|---|---|
| Experimental example 1 | Resin A | | Resin B | | Resin C | | Resin D | | Resin E | |
| | Display region | Non-display region | Display region | Non-display region | Display region | Non-display region | Display region | Non-display region | Display region | Non-display region |
| Coating layer P | 98% | 38% | 99% | 50% | 97% | 66% | 98% | 97% | 98% | 98% |
| Coating laver Q | 98% | 56% | 97% | 46% | 99% | 65% | 97% | 98% | 98% | 99% |
| Coating laver R | 97% | 42% | 98% | 44% | 97% | 52% | 99% | 52% | 98% | 46% |

**[Table 9]**

| Experimental Example 1: screen size (diagonal dimensions) 55 inches | | | | | | | | | | |
|---|---|---|---|---|---|---|---|---|---|---|
| Experimental example 1 | Resin A | | Resin B | | Resin C | | Resin D | | Resin E | |
| | Display region | Non-display region | Display region | Non-display region | Display region | Non-display region | Display region | Non-display region | Display region | Non-display region |
| Coating layer P | 98% | 40% | 99% | 50% | 99% | 66% | 98% | 97% | 98% | 98% |
| Coating laver Q | 98% | 56% | 97% | 46% | 99% | 65% | 97% | 98% | 97% | 98% |
| Coating laver R | 99% | 42% | 98% | 44% | 97% | 52% | 99% | 58% | 99% | 52% |

**[Table 10]**

| Experimental Example 2: screen size (diagonal dimensions) 46 inches | | | | | | | | | | |
|---|---|---|---|---|---|---|---|---|---|---|
| Experimental example 2 | Resin A | | Resin B | | Resin C | | Resin D | | Resin E | |
| | Display region | Non-display region | Display region | Non-display region | Display region | Non-display region | Display region | Non-display region | Display region | Non-display region |
| Adhesive layer S | 99% | 50% | 98% | 56% | 97% | 66% | 98% | 97% | 97% | 98% |
| Adhesive laver T | 97% | 46% | 97% | 42% | 99% | 65% | 98% | 98% | 99% | 99% |
| Adhesive laver U | 98% | 44% | 97% | 42% | 97% | 52% | 99% | 50% | 98% | 46% |

**[Table 11]**

| Experimental Example 2: screen size (diagonal dimensions) 55 inches | | | | | | | | | | |
|---|---|---|---|---|---|---|---|---|---|---|
| Experimental example 2 | Resin A | | Resin B | | Resin C | | Resin D | | Resin E | |
| | Display region | Non-display region | Display region | Non-display region | Display region | Non-display region | Display region | Non-display region | Display region | Non-display region |
| Adhesive layer S | 98% | 38% | 99% | 50% | 97% | 66% | 96% | 97% | 98% | 98% |
| Adhesive laver T | 96% | 48% | 98% | 50% | 98% | 66% | 99% | 98% | 98% | 97% |
| Adhesive laver U | 97% | 42% | 97% | 46% | 98% | 59% | 99% | 49% | 97% | 48% |

**[Table 12]**

| Comparative Example: screen size (diagonal dimensions) 46 inches | | |
|---|---|---|
| Comparative example | Resin E | |
| | Display region | Non-display region |
| | 98% | 30% |

**[Table 13]**

| Comparative Example: screen size (diagonal dimensions) 55 inches | | |
|---|---|---|
| Comparative example | Resin E | |
| | Display region | Non-display region |
| | 98% | 38% |

As is found from Table 2 to Table 5 and Table 8 to Table 11, when the resin D or E that has a refractive index in a liquid state before curing and a refractive index in a solid state after curing both higher than the refractive index of the transparent substrate 30 was used as the resin 21 as well as the coating layer P or Q or the adhesive layer S or T that has a refractive index lower than the refractive index of the transparent substrate 30 was used as the intermediate layer 40, the resin layer 20 in a section (on the backside of the light shielding layer 50) corresponding to the non-display region B was sufficiently cured, and display unevenness was not observed.

In contrast, when the resin A, B, or C in which one or both of the refractive index in a liquid state before curing and the refractive index in a solid state after curing is lower than the refractive index of the transparent substrate 30 was used as the resin 21, the resin layer 20 in the section (on the backside of the light shielding layer 50) corresponding to the non-display region B was insufficiently cured, and frame-like unevenness occurred.

Moreover, when the coating layer R or the adhesive layer U that has a refractive index higher than that of the transparent substrate 30 was used as the intermediate layer 40, curing of the resin layer 20 in the section (on the backside of the light shielding layer 50) corresponding to the non-display region B was insufficient and frame-like unevenness occurred, irrespective of using any of the resins A to E.

In addition, as is found from Table 6, Table 7, Table 12, and Table 13, in the comparative example 1 in which the light shielding layer 150 was provided on the back surface 130C of the transparent substrate 130, curing of the resin layer 20 in the section (on the backside of the light shielding layer 150) corresponding to the non-display region was insufficient, and frame-like unevenness occurred.

Specifically, it was found that forming the resin layer 20 by the resin 21 that has a refractive index in a liquid state before curing and a refractive index in a solid state after curing both higher than the refractive index of the transparent substrate 30 in the wavelength range of the light L used for curing as well as providing the intermediate layer 40 that has a refractive index lower than that of the transparent substrate 30 in the wavelength range of the light L used for curing the resin 21 on the front surface 30A of the transparent substrate 30 and providing the light shielding layer 50 on the front surface 40A of the intermediate layer 40 make it possible to suppress the curing failure of the resin layer 20 in the section (on the backside of the light shielding layer 50) corresponding to the non-display region B, and to suppress frame-like display unevenness or the like in the non-display region B or in the vicinity thereof.

As described above, although the present invention has been described with reference to the embodiments and the examples, the present invention is not limited to the above-described embodiments and the like, and various modifications may be made. For example, in the above-described embodiments and the like, although the case where the polarizing plate 11B on the light emission side of the display panel 10 is bonded to the surface of the display panel 10 has been described as an example, the polarizing plate 11B may be provided on the front surface 30A of the transparent substrate 30.

Moreover, in the above-described embodiments and the above-described examples, although the case where a liquid crystal display panel is used as the display panel 10 has been described as an example, the present invention is applicable to the case where the other display panel 10 such as an organic EL (electroluminescence) panel and a plasma display panel is used.

## Claims

1. A display comprising:
a display panel including a display region and a non-display region, the display region including a plurality of pixels, and the non-display region surrounding the display region;
a resin layer provided on a front surface of the display panel and formed of a photocurable resin, the resin having a refractive index higher than a refractive index of the transparent substrate before and after curing in a wavelength range of light used for curing;
a transparent substrate provided on a front surface of the resin layer;
an intermediate layer provided on a front surface of the transparent substrate and having a refractive index lower than the refractive index of the transparent substrate in the wavelength range of the light used for curing the resin; and
a light shielding layer provided in a region of a front surface of the intermediate layer, the region facing the non-display region.

2. The display according to claim 1, further comprising
a semi-transmissive layer provided in a region between a region of the front surface of the intermediate layer facing the display region and the light shielding layer, wherein
a light transmittance of the semi-transmissive layer is lower than a light transmittance of the transparent substrate and is higher than a light transmittance of the light shielding layer.

3. A display comprising:
a display panel including a display region and a non-display region, the display region including a plurality of pixels, and the non-display region surrounding the display region;
a resin layer provided on a front surface of the display panel and formed of a photocurable resin, the resin having a refractive index higher than a refractive index of the transparent substrate before and after curing in a wavelength range of light used for curing;
a transparent substrate provided on a front surface of the resin layer; and
a light shielding layer provided in a region of a front surface of the transparent substrate, the region facing the non-display region, and the light shielding layer having a refractive index lower than the refractive index of the transparent substrate in the wavelength range of the light used for curing the resin.

4. The display according to claim 3, further comprising
a semi-transmissive layer provided in a region between a region of the front surface of the transparent substrate facing the display region and the light shielding layer, the semi-transmissive layer having a refractive index lower than the refractive index of the transparent substrate in the wavelength range of the light used for curing the resin, wherein
a light transmittance of the semi-transmissive layer is lower than a light transmittance of the transparent substrate and is higher than a light transmittance of the light shielding layer.

5. A method of manufacturing a display, the method comprising:
providing a transparent substrate on a front surface of a display panel with a photocurable resin in between, the display panel including a display region and a non-display region, the display region including a plurality of pixels, the non-display region surrounding the display region, and using, as the resin, a resin having a refractive index higher than a refractive index of the transparent substrate before and after curing in a wavelength range of light used for curing;
providing an intermediate layer on a front surface of the transparent substrate, the intermediate layer having a refractive index lower than the refractive index of the transparent substrate in the wavelength range of the light used for curing the resin;
providing a light shielding layer in a region of a front surface of the intermediate layer facing the non-display region; and
forming a resin layer by applying light from a front surface side and a side surface side of the display panel to cure the resin.

6. A method of manufacturing a display, the method comprising:
providing a transparent substrate on a front surface of a display panel with a photocurable resin in between, the display panel including a display region and a non-display region, the display region including a plurality of pixels, the non-display region surrounding the display region, and using, as the resin, a resin having a refractive index higher than a refractive index of the transparent substrate before and after curing in a wavelength range of light used for curing;
providing a light shielding layer in a region of a front surface of the transparent substrate facing the non-display region, the light shielding layer having a refractive index lower than the refractive index of the transparent substrate in the wavelength range of the light used for curing the resin; and
forming a resin layer by applying light from a front surface side and a side surface side of the display panel to cure the resin.
